# EUROPÄISCHE PATENTANMELDUNG

(11) **EP 1 458 172 A2**
(43) Veröffentlichungstag der Anmeldung: **15.09.2004**
(21) Anmeldenummer: 04000562.1
(22) Anmeldetag: 14.01.2004
(51) Int. Cl.: H04M 7/00

(54) **Telekommunikationsanlage die einen Computernetzwerkanschluss enthält**

(30) Priorität: 11.03.2003 DE 10311678
(71) Anmelder: DeTeWe - Deutsche Telephonwerke Aktiengesellschaft & Co. KG, 10997 Berlin (DE)
(72) Erfinder: Wellhausen, Thomas, Dipl.-Ing., 14193 Berlin (DE); Wilkening, Volker, Dr.-Ing., 24582 Bordesholm (DE)

(57) **Zusammenfassung**

Die Erfindung bezieht sich auf eine Telekommunikationsanlage mit zumindest einem Anschluss für das öffentliche Telekommunikationsnetz (50) und zumindest einem Anschluss für ein Telekommunikationsendgerät.

Der Erfindung liegt die Aufgabe zugrunde, die Benutzerfreundlichkeit einer solchen Telekommunikationsanlage zu erhöhen.

Diese Aufgabe wird erfindungsgemäß dadurch gelöst, dass die Telekommunikationsanlage (10) mindestens einen Netzwerkanschluss (110) zum Anschluss mindestens einer Rechnereinrichtung (120) aufweist.

## Beschreibung

Die Erfindung bezieht sich auf eine Telekommunikationsanlage mit zumindest einem Anschluss für das öffentliche Telefonnetz und zumindest einem Anschluss für ein Telekommunikationsendgerät.

Der Erfindung liegt bezüglich einer solchen Telekommunikationsanlage die Aufgabe zugrunde, die Benutzerfreundlichkeit zu erhöhen.

Diese Aufgabe wird erfindungsgemäß durch die kennzeichnenden Merkmale des Anspruchs 1 gelöst. Vorteilhafte Ausgestaltungen der Erfindungen sind in Unteransprüchen angegeben.

Danach ist erfindungsgemäß vorgesehen, dass die Telekommunikationsanlage mindestens einen Netzwerkanschluss zum Anschluss zumindest einer Rechnereinrichtung aufweist.

Ein wesentlicher Vorteil der erfindungsgemäßen Telekommunikationsanlage besteht darin, dass aufgrund des zusätzlichen Netzwerkanschlusses eine Rechnereinrichtung an die Telekommunikationsanlage und damit mittelbar auch an das öffentliche Kommunikationsnetz anschließbar ist. Auf ein separates Modem zum Anschluss der Rechnereinrichtung an die Telekommunikationsanlage kann damit verzichtet werden; denn die Telekommunikationsanlage stellt bereits einen computergeeigneten Netzwerkanschluss bereit.

Der mindestens eine Anschluss der Telekommunikationsanlage für das öffentliche Kommunikationsnetz ist bevorzugt ein ISDN-Anschluss; denn ISDN-Anschlüsse ermöglichen u. a. den Anschluss gleichzeitig mehrerer Telekommunikationsendgeräte.

Darüber hinaus wird es als vorteilhaft angesehen, wenn die Telekommunikationsanlage zusätzlich zu dem ISDN-Anschluss oder alternativ zu dem ISDN-Anschluss einen DSL-Anschluss aufweist, mit dem die Telekommunikationsanlage an das öffentliche Kommunikationsnetz anschließbar ist. Über einen DSL-(DSL: Digital Subscriber Line)-Anschluss lassen sich nämlich Daten mit sehr hoher Datenrate übertragen, wodurch beispielsweise die Wartezeiten bei der Benutzung des Internets für an die Telekommunikationsanlage angeschlossene Rechnereinrichtungen reduziert wird.

Bei dem DSL-Anschluss kann es sich beispielsweise um einen ADSL-(ADSL: Asymmetric Digital Subscriber Line )-Anschluss handeln.

Um zu ermöglichen, dass an eine Telekommunikationsanlage eine Vielzahl von Rechnereinrichtungen anschließbar ist, wird es als vorteilhaft angesehen, wenn in der Telekommunikationsanlage ein Router oder Switch (Schalter) vorhanden ist, an den sich eine Mehrzahl von Rechnereinrichtungen anschließen lässt.

Vorteilhaft weist der Router/Switch einen DHCT-Server zur automatischen Vergabe von IP-Netzwerkadressen und/oder eine Firewallfunktion auf.

Die eingangs genannte Aufgabe wird erfindungsgemäß darüber hinaus auch durch eine Telekommunikationsanlage mit einer Schnittstelle gelöst, über die eine Rechnereinrichtung per Funkverbindung an die Telekommunikationsanlage anschließbar ist. Weist nämlich die Telekommunikationsanlage eine solche Funkschnittstelle auf, so kann eine Rechnereinrichtung mit der Telekommunikationseinrichtung in eine Datenverbindung gebracht werden, ohne dass es einer Kabel- bzw. Drahtverbindung bedarf. Die Rechnereinrichtung ist also "mobil".

Die Funkschnittstelle ist vorteilhaft durch eine in eine Kartenbuchse der Telekommunikationsanlage lösbar einschiebbare Mobilfunkkarte gebildet. Weist die Telekommunikationsanlage eine solche Kartenbuchse auf, so kann durch Auswechseln der Mobilfunkkarten ein Funkbetrieb mit verschiedenen Funkstandards ausgewählt werden.

Die Mobilfunkkarte kann beispielsweise eine sogenannte "Flashkarte" sein.

Bei der Kartenbuchse handelt es sich bevorzugt um eine CF II-Buchse, da eine solche Buchse "hotplug-fähig" ist, also in Betrieb genommen werden kann, ohne dass die Telekommunikationsanlage zuvor außer Betrieb genommen werden muss.

Zum Übertragen von Sprach- und Datensignalen hat sich der DECT-Funkstandard bewährt, so dass es als vorteilhaft angesehen wird, wenn die Mobilfunkkarte nach dem DECT-Standard arbeitet.

Alternativ kann die Mobilfunkkarte auch nach dem WiFi-Standard arbeiten, so dass eine Vielzahl von Rechnereinrichtungen gleichzeitig mit der Telekommunikationsanlage "kabelfrei" in eine Datenverbindung eintreten kann.

Die Erfindung bezieht sich darüber hinaus auf ein Verfahren zum Betrieb einer Telekommunikationsanlage, insbesondere einer Telekommunikationsanlage nach einem der vorangehenden Ansprüche.

Diesbezüglich liegt der Erfindung die Aufgabe zugrunde, ein besonders benutzerfreundliches Verfahren anzugeben.

Diese Aufgabe wird erfindungsgemäß durch die kennzeichnenden Merkmale des Anspruchs 13 gelöst. Vorteilhafte Ausgestaltungen des erfindungsgemäßen Verfahrens sind in sich auf Anspruch 13 rückbeziehenden Unteransprüchen angegeben.

Danach ist erfindungsgemäß vorgesehen, dass mit einer Rechner - bzw. Computereinrichtung, insbesondere einem tragbaren Computer - beispielsweise einem Laptop- oder Notebook-Computer oder einem PDA (PDA: Personal Digital Assistant) - eine akustische Sprachinformation in digitale Daten umgewandelt wird, die digitalen Daten über eine Funkverbindung zur Telekommunikationsanlage übersendet werden, mit der Telekommunikationsanlage die digitalen Daten ins Internet eingespeist werden und die digitalen Daten zum Empfänger über das Internet übertragen werden.

Ein wesentlicher Vorteil des erfindungsgemäßen Verfahrens ist darin zu sehen, dass mit der Telekommunikationsanlage Sprachinformationen sowohl über das übliche Telefonnetz - unter Bezahlung der üblichen Telefongebühren - als auch über das Internet - unter Bezahlung der für das Internet üblichen Gebühren - geführt werden können. Insbesondere bei der Benutzung des Internets zur Sprachübertragung werden somit deutlich Kosten gespart, weil nämlich Internetgebühren - zumindest derzeit - deutlich die entsprechenden Telefongebühren unterschreiten.

Um ein unmittelbares Einspeisen der Sprachinformationen in das Internet zu ermöglichen, wird es als vorteilhaft angesehen, wenn die Sprachinformationen in der Rechnereinrichtung unmittelbar in digitale Daten, die dem Internet-Protokoll in entsprechen, umgewandelt werden.

Zur Übertragung von digitalen Daten über Funk hat sich die DECT-Übertragungstechnik bewährt, so dass es als vorteilhaft angesehen wird, wenn die digitalen Daten über eine DECT-Funkverbindung von der Rechnereinrichtung zur Telekommunikationsanlage übertragen werden.

Alternativ können die digitalen Daten über eine WiFi-Funkverbindung übertragen werden; eine solche WiFi-Funkverbindung weist den Vorteil auf, dass eine Vielzahl von Benutzern über das gleiche WiFi-Netzwerk auf das Internet zugreifen können.

Darüber hinaus wird es als vorteilhaft angesehen, wenn zum Erzeugen der digitalen Daten ein PDA verwendet wird, in dem ein Mikrofon integriert und/oder an dem ein Mikrofon anschließbar ist. Bei dieser Ausgestaltung des erfindungsgemäßen Verfahrens-wird also mit einem PDA eine Sprachübertragung gemäß dem Intemetprotokoll unter Verwendung einer Telekommunikationsanlage durchgeführt.

Zur Erläuterung der erfindungsgemäßen Telekommunikationsanlage und zur Erläuterung des erfindungsgemäßen Verfahrens ist in einer Figur ein Ausführungsbeispiel für ein erfindungsgemäßes Telekommunikationsgerät dargestellt, das sich mit dem erfindungsgemäßen Verfahren betreiben lässt.

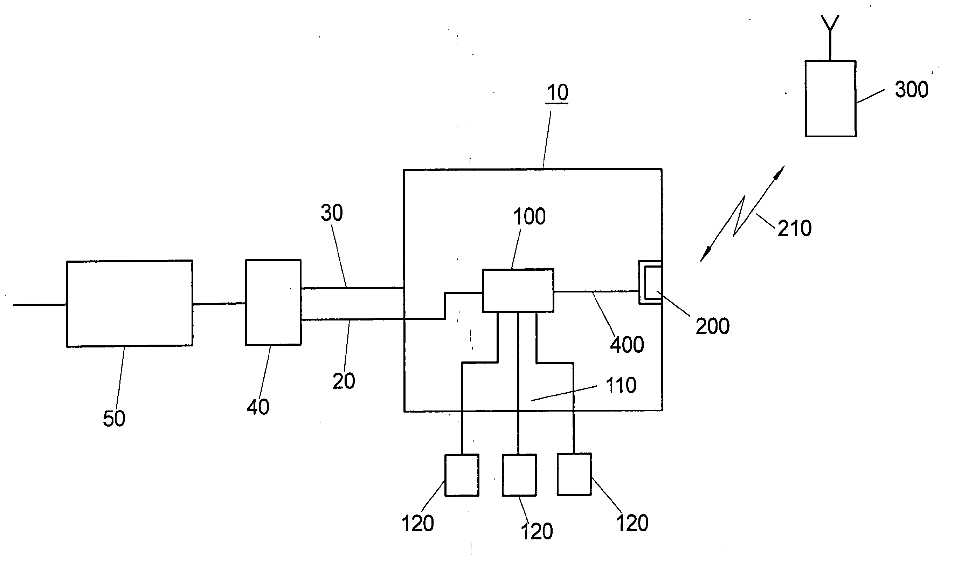

In der Figur erkennt man eine Telekommunikationsanlage 10, die über eine DSL-Leitung 20 und eine ISDN-Leitung 30 an ein Modem 40 angeschlossen ist. Das Modem 40 steht unmittelbar mit dem öffentlichen Kommunikationsnetz 50 in Verbindung.

Das Telekommunikationsgerät 10 weist einen Router oder Switch 100 auf, der an die DSL-Leitung 20 angeschlossen ist. Der Router/Switch 100 - nachfolgend kurz Router genannt - ist mit Netzwerkanschlüssen 110 ausgestattet, mit denen sich eine Vielzahl an Rechnereinrichtungen an den Router 100 anschließen lässt. In der Figur sind beispielhaft drei Rechnereinrichtungen 120 gezeigt, die über die Anschlüsse 110 an den Router 100 angeschlossen sind.

An den Router 100 ist darüber hinaus eine Mobilfunkkarte 200 angeschlossen, die in eine Kartenbuchse der Telekommunikationsanlage 10 eingeschoben ist. Die Mobilfunkkarte 200 steht über eine DECT-Funkverbindung 210 mit einem PDA (Personal Digital Assistent) 300 in Verbindung.

Der Router 100 verfügt über einen DHCP-Server zur automatischen Vergabe von IP-Netzwerkadressen und weist eine Firewallfunktion auf. Aufgrund der Firewallfunktion werden unerlaubte Zugriffe aus dem Internet bzw. aus dem öffentlichen Kommunikationsnetz 50 auf die angeschlossenen Rechnereinrichtungen 120 unterbunden.

Die Anzahl der an den Router 100 anschließbaren Rechnereinrichtungen ist über einen in der Figur nicht dargestellten externen Switch/Hub erweiterbar.

Die Telekommunikationsanlage 10 verfügt darüber hinaus über mehrere a/b-Ports, einen V.24- und einen USB-Port, die der Übersichtlichkeit halber in der Figur nicht dargestellt sind.

Die Mobilfunkkarte 200 kann beispielsweise eine W-LAN (WiFi) oder eine DECT-Mobilfunkkarte sein. Die Mobilfunkkarte kann beispielsweise im Format einer "Flashkarte" ausgeführt sein.

Die Telekommunikationsanlage 10 ist dabei derart ausgestaltet, dass sich über diese an die Telekommunikationsanlage 10 angeschlossene Telefone, der Internetanschluss und die Rechnereinrichtungen konfigurieren lassen. Beispielsweise sind bis zu einhundert Rufnummern speicherbar und bis zu zehn MSN (MSN: Multiple Subscriber Number) können den analogen a/b-Schnittstellen zugeordnet werden. Auch das Vermitteln und Heranholen von Gesprächen ist möglich, und alle ISDN-Leistungsmerkmale, wie Dreierkonferenz, Clip-Rufnummernanzeige und automatischer Rückruf bei Besetzt-Zeichen werden unterstützt. Sogar der Empfang von SMS und/oder MMS (MMS: Multimedia Message) im Festnetz ist möglich, sofern an die Telekommunikationsanlage 10 SMS-fähige Endgeräte angeschlossen werden.

Die Telekommunikationsanlage 10 kann beispielsweise wie folgt betrieben werden:

Zunächst werden mit dem PDA 300 Sprachsignale bzw. Sprachinformationen in digitale Daten umgewandelt. Hierfür weist der PDA 300 ein integriertes Mikrofon auf, mit dem die akustischen Sprachsignale empfangen werden können.

Die Umwandlung der akustischen Sprachsignale in digitale Daten erfolgt dabei nach dem sogenannten Intemetprotokoll, so dass die erzeugten digitalen Daten später im Internet übertragen werden können. Die von dem PDA 300 erzeugten Daten werden über die DECT-Funkverbindung 210 zu der Funkschnittstelle bzw. Mobilfunkkarte 200 des Telekommunikationsgeräts 10 übertragen. Die Mobilfunkkarte 200 überträgt die Daten über eine Netzwerkleitung 400 zu dem Router 100, der diese in die DSL-Leitung 20 und damit über das Modem 40 in das öffentliche Kommunikationsnetz 50 einspeist.

Entsprechend kann in umgekehrter Richtung ein nach dem Intemetprotokoll umgewandeltes akustisches Sprachsignal von dem öffentlichen Kommunikationsnetz 50 zu dem Modem 40 gelangen, von wo es über den Router 100 und die Mobilfunkkarte 200 zu dem PDA 300 gelangen kann.

### Bezugszeichen

- 10: Telekommunikationsanlage
- 20: DSL-Leitung
- 30: ISDN-Leitung
- 40: Modem
- 50: Öffentliches Kommunikationsnetz
- 100: Router
- 110: Netzwerkanschlüsse
- 120: Rechnereinrichtungen
- 200: Mobilfunkkarte
- 210: DECT-Funkverbindung
- 300: PDA

## Patentansprüche

1. Telekommunikationsanlage mit zumindest einem Anschluss für das öffentliche Telekommunikationsnetz (50) und zumindest einem Anschluss für ein Telekommunikationsendgerät,
**dadurch gekennzeichnet,**
**dass** die Telekommunikationsanlage (10) mindestens einen Netzwerkanschluss (110) zum Anschluss mindestens einer Rechnereinrichtung (120) aufweist.

2. Telekommunikationsanlage nach Anspruch 1, **dadurch gekennzeichnet, dass** der mindestens eine Anschluss für das öffentliche Kommunikationsnetz (50) durch einen ISDN-Anschluss oder einen Analog-Zugang gebildet ist.

3. Telekommunikationsanlage nach einem der vorangehenden Ansprüche, **dadurch gekennzeichnet, dass** die Telekommunikationsanlage (10) mindestens einen DSL-Anschluss aufweist.

4. Telekommunikationsanlage nach Anspruch 3, **dadurch gekennzeichnet, dass** der DSL-Anschluss ein ADSL-Anschluss ist.

5. Telekommunikationsanlage nach einem der vorangehenden Ansprüche, **dadurch gekennzeichnet, dass** die Telekommunikationsanlage einen Router oder Switch (100) aufweist, an den eine Mehrzahl an Rechnereinrichtungen (120) anschließbar ist.

6. Telekommunikationsanlage nach Anspruch 5, **dadurch gekennzeichnet, dass** der Router bzw. Switch (100) ein DHCP-Server zur automatischen Vergabe von IP-Netzwerkadressen und/oder eine Firewallfunktion aufweist.

7. Telekommunikationsanlage mit zumindest einem Anschluss für das öffentliche Telekommunikationsnetz und zumindest einem Anschluss für ein Telekommunikationsendgerät, insbesondere nach einem der vorangehenden Ansprüche, **dadurch gekennzeichnet, dass** die Telekommunikationsanlage (100) eine Funkschnittstelle (200) aufweist, über die eine Rechnereinrichtung (300) per Funkverbindung (210) an die Telekommunikationsanlage (10) anschließbar ist.

8. Telekommunikationsanlage nach Anspruch 7, **dadurch gekennzeichnet, dass** die Funkschnittstelle durch eine in eine Kartenbuchse des Telekommunikationsgerätes (10) lösbar einschiebbare Mobilfunkkarte (200) gebildet ist.

9. Telekommunikationsanlage nach Anspruch 8, **dadurch gekennzeichnet, dass** die Kartenbuchse derart ausgestaltet ist, dass eine als Flashkarte ausgestaltete Mobilfunkkarte (200) in die Telekommunikationsanlage (10) einschiebbar ist.

10. Telekommunikationsanlage nach Anspruch 9, **dadurch gekennzeichnet, dass** die Kartenbuchse eine CF II-Buchse ist.

11. Telekommunikationsanlage nach einem der vorangehenden Ansprüche, **dadurch gekennzeichnet, dass** die Mobilfunkkarte (200) nach dem DECT-Standard arbeitet.

12. Telekommunikationsanlage nach einem der vorangehenden Ansprüche 1 bis 11, **dadurch gekennzeichnet, dass** die Mobilfunkkarte nach dem WiFi-Standard arbeitet.

13. Verfahren zum Betrieb einer Telekommunikationsanlage, insbesondere einer solchen mit den Merkmalen nach einem der vorangehenden Ansprüche, **dadurch gekennzeichnet, dass** mit einer Rechnereinrichtung, insbesondere einem tragbaren Computer - beispielsweise einem Laptop- oder Notebook-Computer oder einem PDA - ein akustisches Sprachsignal in digitale Daten umgewandelt wird, die digitalen Daten über eine Funkverbindung (210) zur Telekommunikationsanlage (10) übersandt werden, mit der Telekommunikationsanlage (10) die digitalen Daten ins Internet (50) eingespeist werden und die digitalen Daten zum Empfänger über das Internet (50) übertragen werden.

14. Verfahren nach Anspruch 13, **dadurch gekennzeichnet, dass** die akustischen Sprachsignale in dem Internet-Protokoll entsprechende, digitale Daten umgewandelt werden.

15. Verfahren nach einem der vorangehenden Ansprüche 13 oder 14, **dadurch gekennzeichnet, dass** die digitalen Daten über eine DECT-Funkverbindung (210) zur Telekommunikationsanlage (10) übertragen werden.

16. Verfahren nach einem der vorangehenden Ansprüche 13 bis 14, **dadurch gekennzeichnet, dass** die digitalen Daten über eine WiFi-Funkverbindung zur Telekornmunikationsanlage (10) übertragen werden.

17. Verfahren nach einem der vorangehenden Ansprüche 13 bis 16, **dadurch gekennzeichnet, dass** die digitalen Daten mit einem PDA (300) erzeugt werden, in dem ein Mikrofon integriert und/oder an das ein Mikrofon anschließbar ist.
